# EUROPÄISCHE PATENTSCHRIFT

(11) **EP 2 524 126 B1**
(45) Veröffentlichungstag und Bekanntmachung des Hinweises auf die Patenterteilung: **08.04.2015**
(21) Anmeldenummer: 11700829.2
(22) Anmeldetag: 11.01.2011
(51) Int. Cl.: F02B 37/10, F02B 33/44, F02D 9/02

(54) **FRISCHGASVERSORGUNGSVORRICHTUNG FÜR EINE VERBRENNUNGSMASCHINE UND VERFAHREN ZUM BETRIEB EINER SOLCHEN FRISCHGASVERSORGUNGSVORRICHTUNG**
FRESH GAS SUPPLY DEVICE FOR AN INTERNAL COMBUSTION ENGINE AND METHOD FOR OPERATING SAID TYPE OF FRESH GAS SUPPLY DEVICE
DISPOSITIF D'ALIMENTATION EN GAZ FRAIS POUR MOTEUR À COMBUSTION INTERNE ET PROCÉDÉ DE FONCTIONNEMENT D'UN TEL DISPOSITIF D'ALIMENTATION EN GAZ FRAIS

(30) Priorität: 14.01.2010 DE 102010004657
(43) Veröffentlichungstag der Anmeldung: 21.11.2012
(73) Patentinhaber: KNORR-BREMSE Systeme für Nutzfahrzeuge GmbH, 80809 München (DE)
(72) Erfinder: GERUM, Eduard, 83026 Rosenheim (DE)
(74) Vertreter: Mattusch, Gundula
(86) Internationale Anmeldenummer: PCT/EP2011/050280
(87) Internationale Veröffentlichungsnummer: WO 2011/086069

(56) Entgegenhaltungen:
- WO-A1-2007/058524
- WO-A1-2010/031560
- CA-A1- 2 500 146
- DE-A1- 19 913 157
- DE-U1-202008 017 549
- US-A- 3 020 901

## Beschreibung

Die Erfindung betrifft eine Frischgasversorgungsvorrichtung für eine Verbrennungsmaschine. Die Erfindung bezieht sich auch auf ein Verfahren zum Betrieb einer solchen Frischgasversorgungsvorrichtung.

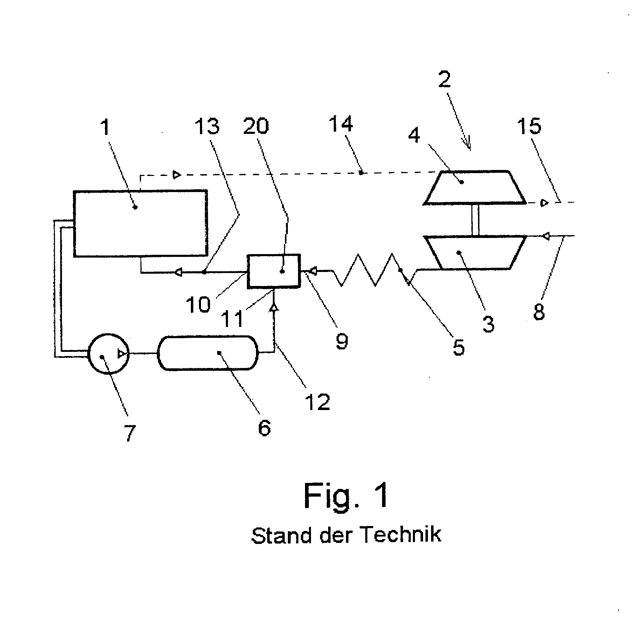

Verbrennungsmaschinen, beispielsweise Dieselmotoren, sind häufig mit Abgasturboladern ausgerüstet. Fig. 1 stellt eine Verbrennungsmaschine 1 dar, deren Abgasleitung 14 mit einer Abgasturbine 4 eines Abgasturboladers 2 verbunden ist. Diese Abgasturbine 4 treibt einen Verdichter 3 des Abgasturboladers 2 an. Der Verdichter 3 verdichtet Ansaugluft aus einem Frischgaseinlass 8 und erhöht damit einen Ansaugdrucks in einer Ansaugleitung 13 der Verbrennungsmaschine 1. Dadurch wird z.B. ein Beschleunigungsverhalten des Fahrzeugs mit der Verbrennungsmaschine 1 verbessert und eine Reduzierung des Kraftstoffverbrauchs erreicht.

Der Abgasturbolader 1 ist jedoch nicht in der Lage, in jedem Betriebszustand der Verbrennungsmaschine 1 ausreichend Luft fördern und somit einen genügenden Ansaugdruck erzeugen. Zum Beispiel weisen Kolbenmaschinen wie Dieselmotoren mit Abgasturbolader 2 beispielsweise einen Betriebszustand beim Beschleunigen auf, der als "Turboloch" bezeichnet wird. Hierbei reagiert die Verbrennungsmaschine 1 beim Gasgeben mit einer Drehzahlerhöhung erst nach einer bestimmten Verzögerungszeit, in welcher keine Abgasenergie, d.h. auch kein genügender Abgasdruck, zum Antrieb des Abgasturboladers 2 und somit keine komprimierte Ansaugluft mit entsprechendem Ansaugdruck zur Verfügung steht. Zur Überbrückung dieses "Turbolochs" sind Lösungsvorschläge gemacht worden, wobei Druckluft, zum Beispiel aus einem von einem Luftverdichter 7 gespeisten Druckluftbehälter 6, gesteuert in die Ansaugleitung 13 der Verbrennungsmaschine 1 eingeleitet wird, um bei erhöhtem Ansaugluftbedarf der Verbrennungsmaschine 1 diesen zu decken. Dieses erfolgt mittels einer Frischgasversorgungsvorrichtung 20, welche zwischen dem Verdichter 3 des Turboladers 2 bzw. einem in Strömungsrichtung nachgeschalteten Ladeluftkühler 5 und der Ansaugleitung 13 angeordnet ist.

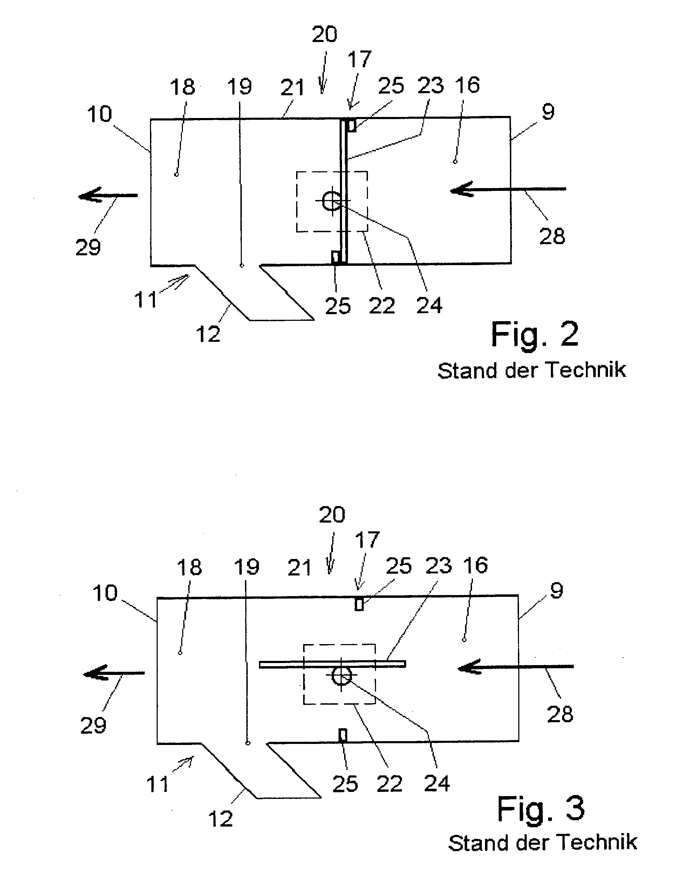

Eine solche Frischgasversorgungsvorrichtung 20 ist in den Fig. 2 und 3 schematisch in Schnittansichten in zwei Betriebszuständen bzw. Stellungen dargestellt. Die Frischgasversorgungsvorrichtung 20 weist einen Gehäusekörper 21 auf und ist mit einem Ladelufteinlass 9 mit dem Ladeluftkühler 5, mit einem Auslass 10 mit der Ansaugleitung 13 und mit einem Drucklufteinlass 11 über eine Druckluftleitung 12 mit dem Druckluftbehälter 6 verbunden. Zwischen dem Ladelufteinlass 9 und dem Auslass 10 befindet sich zwischen einem Einlassabschnitt 16 und einem Auslassabschnitt 18 ein Ventilabschnitt 19, in welchem ein Klappenventil 23 zum Schließen und Öffnen des Ventilabschnitts 19 angeordnet ist. Das Klappenventil 23 ist vorzugsweise um eine Klappendrehachse 24 verschwenkbar ausgebildet. Die Druckluftleitung 12 mit dem Drucklufteinlass 11 kommuniziert über eine Einblasöffnung 19 mit dem Auslassabschnitt 18. Dabei ist die Druckluftleitung 12 so angeordnet, dass eine Druckluftströmung 30 zum Auslass 10 des Auslassabschnitts 18 hin gerichtet ist.

Fig. 2 zeigt die Frischluftversorgungsvorrichtung 20 in einer Stellung für Zusatzluft bzw. Druckluft. Dabei ist das Klappenventil 23 um die Klappendrehachse 24 so verschwenkt, dass es den Ventilabschnitt 19 und somit die Verbindung des Einlassabschnitts 16 zum Auslassabschnitt 18 verschließt. Das Klappenventil 23 liegt in dieser Verschlussposition mit seinem Außenrand an einem Anschlagabschnitt 25 des Gehäusekörpers 21 an und verschließt den Ventilabschnitt 17.

In Fig. 3 ist die Frischluftversorgungsvorrichtung 20 in einer Stellung für Ladeluft dargestellt. Das Klappenventil 23 ist gegen den Uhrzeigersinn um die Klappendrehachse 24 verschwenkt und hat den Ventilabschnitt 17 geöffnet. Die Ladeluftströmung 28 kann durch den Ventilabschnitt 17 in den Auslassabschnitt 18 und in den Auslass 10 strömen, um eine Ansaugströmung 29 zu bilden, die in die Ansaugleitung 13 der Verbrennungsmaschine 1 strömt. Die Druckluftströmung 30 ist in diesem Fall nicht vorhanden, wobei die Druckluftleitung 12 z.B. durch ein Ventil geschlossen ist.

In einer Version verschwenkt das Klappenventil 23 in seine Verschlussposition (Fig. 2), wenn der Druck in Strömungsrichtung einer Ansaugströmung 29 in die (hier nicht gezeigte) Ansaugleitung 13 in dem Auslassabschnitt 18 höher ist als der Druck einer Ladeluftströmung 28 in dem Einlassabschnitt 16. Dies erfolgt dadurch, dass bei einer Drehmomentanforderung für die Verbrennungsmaschine 1 die Druckluftleitung 12 in nicht gezeigter Weise mit der Druckluftströmung 30 für die einzublasende Zusatzluft beaufschlagt wird. Dazu muss sich aber erst der entsprechende Druck aufbauen, wodurch es zu Verlusten kommen kann. Diese Drucklufteinblasung kann praktisch nur dann erfolgen, wenn wegen der bei einem Fahrzeug begrenzt zur Verfügung stehenden Druckluft keine Druckluftverluste entstehen. Aus diesem Grund verhindert das Klappenventil 23 eine Rückströmung der Druckluftströmung 30 in entgegengesetzte Ladeluftströmung 28 in den Einlassabschnitt 16. Das Klappenventil 23 ist mit einer Verstelleinrichtung 22 gekoppelt, welche im Normalfall durch eine Rückstellfeder gebildet ist, die das Klappenventil 23 bei fehlendem Druck der Ladeluftströmung 28 in die in Fig. 2 gezeigte geschlossene Stellung, d.h. Stellung für Druckluft, verschwenkt. Bei einer solchen Verstelleinrichtung 22 mit Feder, d.h. bei einem so genannten Feder-Rückschlagventil, können die Schließzeiten zu lang werden. Daher kann zu viel Druckluft in den Einlassabschnitt 16 und in Richtung Ladeluftkühler 5 bzw. Verdichter 3 strömen.

In einer anderen Ausführung, welche die Anmeldeschrift WO 2006/089779 A1 in einer Einrichtung zur Frischluftversorgung einer turboaufgeladenen Kolbenbrennkraftmaschine und einem Verfahren zum Betrieb derselben beschreibt, wird das Klappenventil 23 von der Verstelleinrichtung 22, zum Beispiel in Ausbildung als Verstellmotor, verstellt. Weiterhin ist der Drucklufteinlass 11 mit dem Auslass 10 über eine Mengenregeleinrichtung (nicht gezeigt), zum Beispiel ein Ventil, mit dem Druckluftbehälter 6 verbunden. Eine nicht gezeigte Steuereinrichtung dient zur Steuerung der Mengenregeleinrichtung und des Verstellmotors. Im Fall einer Drehmomentanforderung bei einem "Kick-Down" führt die Mengenregeleinrichtung eine Druckluftströmung 30 durch den Drucklufteinlass 11 dem Auslass 10 zu. Zuvor wird das Klappenventil 23 von der Verstelleinrichtung 22 geschlossen, so dass die Druckluftströmung 30 nicht über den Ladelufteinlass 9 in den Verdichter 3 des Abgasturboladers 2 entgegen der Absaugrichtung bzw. Ladeluftströmung 28, sondern über den Auslass 10 gerichtet in die Ansaugleitung 13 strömt. Bei Beenden der Druckluftzufuhr wird dieses Klappenventil 23 wieder geöffnet und die Mengenregeleinrichtung geschlossen. Zu diesem Zeitpunkt ist der Druck der Ladeluftströmung 28 im Einlassabschnitt 16 durch den Verdichter 3 des Abgasturboladers 2 wieder ausreichend.

Ein Klappenventil 23 mit Rückstellfeder als Verstelleinrichtung 22 kann einen Druck- und somit auch Zeitverlust mit einhergehendem Energieverbrauch mit sich bringen. Andererseits ergibt eine elektrische Verstellvorrichtung 22, zum Beispiel ein Stellmotor mit Positionsgeber und zugehöriger Ansteuerung, eine höhere Bauteilzahl und einen entsprechenden Kostenaufwand.

Es ist daher die Aufgabe der vorliegenden Erfindung, eine verbesserte Frischgasversorgungsvorrichtung bereitzustellen. Eine weitere Aufgabe besteht darin, ein entsprechendes Verfahren zum Betrieb einer Frischgasversorgungsvorrichtung. anzugeben.

Die Aufgabe wird durch eine Frischgasversorgungsvorrichtung mit den Merkmalen des Anspruchs 1 und auch durch ein Verfahren mit den Merkmalen des Anspruchs 7 gelöst.

Ein vorteilhafter Gedanke der Erfindung besteht darin, die einzublasende Druckluft entgegengesetzt zu der Ladeluftströmung bzw. zu einer Ansaugströmung gegen das Klappenventil, zu richten.

Dabei ist es bevorzugt möglich, dass das zumindest eine Klappenventil als Feder-Rückschlagklappenventil ausgebildet ist, wobei die Verstelleinrichtung als Rückstellfeder ausgebildet ist. Diese einfache Ausführung ist mit einer geringen Anzahl von Bauteilen vorteilllaft ausführbar.

Das zumindest eine Klappenventil ist exzentrisch mit der Klappendrehachse gekoppelt, hierdurch ergibt sich durch die auf das Klappenventil einwirkenden Strömungen und Druckverhältnisse eine durch diese unterstützte Verschwenkbewegung.

Es ist dazu vorteilhaft, dass das zumindest eine Klappenventil einen ersten Anströmabschnitt zur Zusammenwirkung mit der Ladeluftströmung und einen zweiten Anströmabschnitt zur Zusammenwirkung mit der Druckluftströmung aufweist.

Dabei ist es bevorzugt, dass die Druckluftströmung auf den zweiten Anströmabschnitt des zumindest einen Klappenventils zur Verstellung desselben in die Verschlussstellung ausgerichtet ist. Dabei ergibt sich der Vorteil einer deutlichen Verringerung der Schließzeit des einfachen, mechanischen Feder-Rückschlagventils, denn der Systemdruck bei Dmckluftanlagen in einem Fahrzeug beträgt zum Beispiel 8 bar, wohingegen der Ladeluftdruck bei niedriger Last einer Verbrennungsmaschine bei Drehmomentanforderung deutlich weniger als 1 bar aufweist. Durch diese kurze Schließzeit werden Druckluftverluste verringert. Eine Reaktionszeit der Verbrennungsmaschine auf die Drehmomentanforderung, d.h. eine Beschleunigung eines Fahrzeugs, das diese Verbrennungsmaschine aufweist, erhöht sich dadurch.

Der Drucklufteinlass kann mit einer Einblasöffnung ausgebildet sein, welche zur strömungsgünstigen Lenkung der Druckluftströmung auf den zweiten Anströmabschnitt des zumindest einen Klappenventils geformt ist. So ist ein Einbauraum verringert, da sich dadurch ein Druckluftleitungsanschluss in seiner Lage im Motorraum des Fahrzeugs an die vorhandene Installation anpassen lässt.

Die Erfindung wird nun anhand von Ausführungsbeispielen mit Bezug auf die beigefügten Zeichnungen näher erläutert. Hierbei zeigt:
- Fig. 1: eine schematische Schnittdarstellung einer Verbrennungsmaschine mit einem Abgasturbolader und einer Frischgasversorgungsvorrichtung nach dem Stand der Technik;
- Fig. 2: eine schematische Schnittdarstellung einer herkömmlichen Frischgasversorgungsvorrichtung nach dem Stand der Technik in einer Stellung für Druckluft;
- Fig. 3: eine schematische Schnittdarstellung der herkömmlichen Frischgasversorgungsvorrichtung nach Fig. 2 in einer Stellung für Ladeluft ;
- Fig. 4: eine schematische Schnittdarstellung eines Ausführungsbeispiels einer erfindungsgemäßen Frischgasversorgungsvorrichtung in einer Stellung für Ladeluft; und
- Fig. 5: eine schematische Schnittdarstellung der erfindungsgemäßen Frischgasversorgungsvorrichtung nach Fig. 4 in einer Stellung für Zusatzluft.

Gleiche Bauelemente bzw. Funktionseinheiten mit gleicher Funktion sind mit gleichen Bezugszeichen in den Figuren gekennzeichnet.

Die Figuren 1 bis 3 sind bereits oben beschrieben worden und werden nicht weiter erläutert, soweit es nicht erforderlich ist.

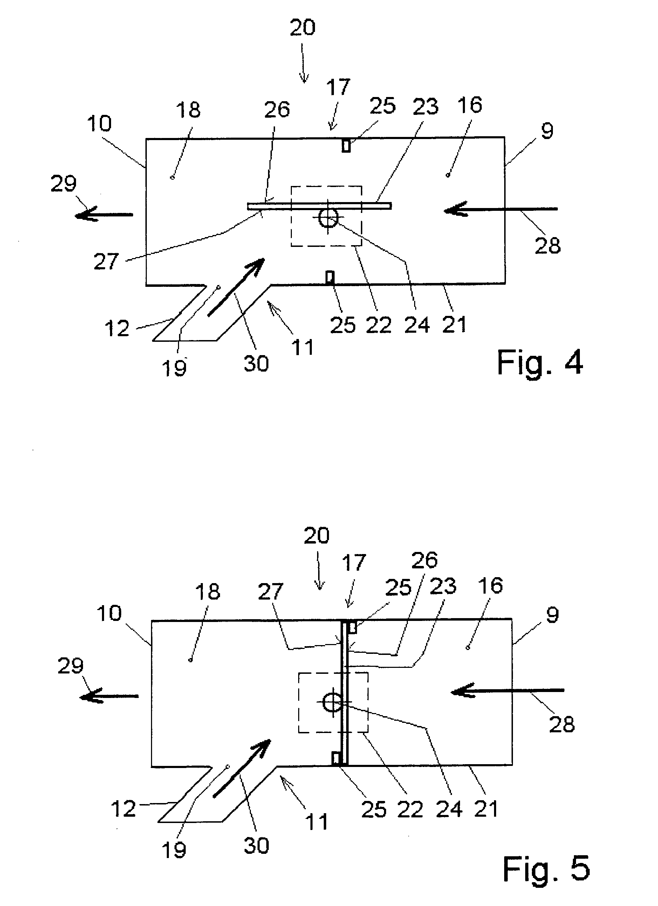

Fig. 4 illustriert eine schematische Schnittdarstellung eines Ausführungsbeispiels einer erfindungsgemäßen Frischgasversorgungsvorrichtung 20 in einer Stellung für Ladeluft.

Die Frischgasversorgungsvorrichtung 20 weist einen im Wesentlichen zylinderförmigen Gehäusekörper 21 mit einem in der Fig. 4 rechts angeordneten Ladelufteinlass 9 (siehe auch Fig. 1) und einem links angeordneten Auslass 10 auf. An den Ladelufteinlass 9 schließt sich ein Einlassabschnitt 16 an, der über einen Ventilabschnitt 17 mit einem Klappenventil 23 in einen Auslassabschnitt 18 übergeht.

An den Ladelufteinlass 9 ist der Verdichter 3 des Abgasturboladers 2 über den Ladeluftkühler 5 (siehe Fig. 1) angeschlossen. Der Verdichter 3 liefert einen Ladeluftstrom 28, welcher die Frischgasversorgungsvorrichtung 20 in ihrer Längsrichtung durch den Ladelufteinlass 9 in Richtung auf den Auslass 10 durchströmt und den Auslass 10 als Ansaugströmung 19 in gleicher Richtung verlässt.

Nahe am Auslass 10 ist ein Drucklufteinlass 11 mit einer Einblasöffnung 19 als Mündung einer Druckluftleitung 12 in den Auslassabschnitt 18 angeordnet. Die Druckluftleitung 12 und der Drucklufteinlass 11 sind in Bezug auf die Frischgasversorgungsvorrichtung 20 so angeordnet, dass eine Druckluftströmung 30 (siehe Fig. 5) entgegengesetzt zu der Ladeluftströmung 28 auf den Ventilabschnitt 17 hin gerichtet ist. Mit anderen Worten ist die Druckluftleitung 12 so an der Frischgasversorgungsvorrichtung 20 angebracht, dass sie in einem Winkel zur Längsrichtung der Frischgasversorgungsvorrichtung 20 entgegengesetzt zu der Richtung der Ansaugströmung 29 der Ansaugleitung 13 (siehe Fig. 1) auf den Ventilabschnitt 17 hin gerichtet ist.

Das Klappenventil 23 ist um eine Klappendrehachse 24 verschwenkbar angeordnet und in diesem Beispiel mit einer Verstelleinrichtung 22 gekoppelt. Die Verstelleinrichtung 22 ist mit einer Rückstellfeder (nicht dargestellt) ausgebildet. Die Rückstellfeder zwingt das Klappenventil 23 im Uhrzeigersinn in die in Fig. 5 gezeigte Verschlussstellung bzw. Stellung für Druckluft gegen einen Anschlagabschnitt 25 des Gehäusekörpers 21. Das Klappenventil 23 dichtet dann mit seinem dazu ausgebildeten umlaufenden Rand den Ventilabschnitt 17 ab, wodurch Ventilabschnitt 17 verschlossen ist. Diese Stellung zeigt Fig. 5.

Bei Betrieb der Verbrennungsmaschine 1 erzeugt die Ansaugströmung 29 einen Unterdruck im Auslassabschnitt 18, welcher zusammen mit der Ladeluftströmung 28 das Klappenventil 23 gegen den Uhrzeigersinn verschwenkt, wobei in vollständig geöffneter Stellung des Klappenventils 23 (Klappenventil 23 parallel zur Längsrichtung der Frischgasversorgungsvorrichtung 20), die Fig. 4 zeigt, der Ventilabschnitt 17 geöffnet ist. Das Klappenventil 23 ist dazu exzentrisch an der Klappendrehachse 24 befestigt und weist an seinem längeren Abschnitt, d.h. von der Klappendrehachse 24 über die Mitte des Klappenventils 23 hinaus bis zu dessen Rand, eine erste Anströmabschnitt 26 und eine zweite, zur ersten Anströmabschnitt 26 entgegengesetzte Anströmabschnitt 27 auf. Die erste Anströmabschnitt 26 wirkt mit der Ladeluftströmung 28 derart zusammen, dass die Ladeluftströmung 28 mit der ersten Anströmabschnitt 26 ein Moment erzeugt, welches das Klappenventil 23 gegen die Kraft der Rückstellfeder der Verstelleinrichtung 22 gegen den Uhrzeigersinn verschwenkt. Selbstverständlich kann das Klappenventil 23 je nach aktuellen Druck- und Strömungsverhältnissen den Ventilabschnitt 17 vergrößern oder verkleinern.

Bei einer Drehmomentanforderung mit hohem Luftbedarf kann der Turbolader 2 diese Luft nicht sofort liefern. In diesem Fall wird zusätzlich Druckluft, z.B. über ein nicht gezeigtes Ventil in der Druckluftleitung 12, in einer Druckluftströmung 30 durch die Druckluftleitung 12 und die Einblasöffnung 19 in den Auslassabschnitt 18 derart in Richtung auf den Ventilabschnitt 17 hin gerichtet eingeblasen, dass das Klappenventil 23 zusätzlich zur Rückstellkraft der Feder der Verstelleinrichtung durch die DruckluftStrömung 30 unterstützt den Ventilabschnitt 17 verschließt. Die Druckluftströmung 30 ist gegen die zweite Anströmabschnitt 27 gerichtet und bewirkt über ihre Strömungskraft (Staudruck) ein Moment an dem Klappenventil 23 im Uhrzeigersinn um die Klappendrehachse 24 zum Verschließen des Klappenventils 23. Da der Systemdruck bei Druckluftanlagen in Fahrzeugen in der Regel mindestens 8 bar beträgt und bei niedriger Last der Verbrennungsmaschine 1 - und nur in diesem Betriebsbereich wird die externe Aufladung mit der Druckluftströmung 30 eingesetzt - der Ladedruck der Ladeluftströmung 28 deutlich weniger als 1 bar beträgt, wird die Schließzeit des Klappenventils 23 erheblich verkürzt. Durch diesen hohen Staudruck der Druckluftströmung 30 im Auslassabschnitt 18 bleibt das Klappenventil 23 während des Einblasens dieser Zusatzluft stabil geschlossen.

Dadurch, dass das Klappenventil 23 verschlossen ist, wird der Ladeluftdruck des Turboladers 2, der durch die zugeführte Druckluft einen entsprechenden Abgasstrom erhält und schneller beschleunigt, auch schneller erhöht. Hat der Ladeluftdruck einen bestimmten Wert erreicht, wird die Mengenregeleinrichtung, bzw. das Ventil (nicht gezeigt) in der Druckluftleitung 12 in nicht näher beschriebener Weise geschlossen und der Staudruck der Druckluftströmung 30 im Auslassbereich 18 nimmt ab, wobei das Klappenventil 23 unterstützt durch die an der ersten Anströmabschnitt 26 wirkende Ladeluftströmung 28 wieder öffnen kann (Fig. 4).

Ein Verfahren zum Betrieb der Frischgasversorgungsvorrichtung 20 weist einen ersten Verfahrensschritt auf, in welchem eine Drehmomentanforderung für die Verbrennungsmaschine ermittelt wird. Hierbei können weitere Betriebsparameter der Verbrennungsmaschine 1, wie beispielsweise der Druck der Ladeluftströmung 28 und/oder Drehzahl der Verbrennungsmaschine überwacht werden und zur Entscheidung mit einfließen. Liegt dementsprechend eine Drehmomentanforderung vor, wobei die Ladeluftströmung 28 nur einen geringen oder keinen Druck erzeugt, so wird in einem zweiten Verfahrensschritt Druckluft in die Frischgasversorgungsvorrichtung 20 gegen die Richtung der Ladeluftströmung 28 eingeblasen. Dabei wird das Klappenventil 23 geschlossen. Erhöht sich der Ladedruck bzw. vergrößert sich die Ladeluftströmung 28 aufgrund höherer Drehzahl der Verbrennungsmaschine 1 und somit auch des Turboladers 2, so wird die Einblasung von Druckluft eingestellt.

Die Erfindung ist nicht auf das oben beschriebene Ausführungsbeispiel beschränkt. Sie ist im Rahmen der beigefügten Ansprüche modifizierbar.

Es ist zum Beispiel denkbar, dass mehr als eine Rückstellfeder als Verstelleinrichtung 22 vorgesehen ist.

Zum Beispiel kann die Druckluftleitung 12 in zwei oder mehrere Kanäle verzweigen und zumindest teilweise am Umfang der Frischgasversorgungsvorrichtung 20 mit zwei oder mehreren Einblasöffnungen in den Auslassabschnitt 18 einmünden.

Es können auch mehr Klappenventile 23 als eines vorgesehen sein.

Der Gehäusekörper 21 kann auch andere Formen aufweisen, z.B. einen ellipsenförmigen Querschnitt. Der Gehäusekörper 21 kann auch abgewinkelt oder bogenförmig in seiner Längsrichtung ausgebildet sein.

Es ist denkbar, dass das Klappenventil 23 ein Rückschlagventil ist, bei dem zumindest eine Seitenkante geradlinig verläuft und mit der Klappendrehachse 24 versehen ist, wobei das Klappenventil 23 um diese Seitenkante verschwenkbar ist.

Die Einblasöffnung 19 kann strömungsgünstig so geformt sein, dass sie den Druckluftstrom gezielt auf den zweiten Anströmabschnitt 27 des Klappenventils 23 lenkt.

### Bezugszeichenliste

- 1: Verbrennungsmaschine
- 2: Abgasturbolader
- 3: Verdichter
- 4: Abgasturbine
- 5: Ladeluftkühler
- 6: Druckluftbehälter
- 7: Luftverdichter
- 8: Frischgaseinlass
- 9: Ladelufteinlass
- 10: Auslass
- 11: Drucklufteinlass
- 12: Druckluftleitung
- 13: Ansaugleitung
- 14: Abgasleitung
- 15: Abgasauslass
- 16: Einlassabschnitt
- 17: Ventilabschnitt
- 18: Auslassabschnitt
- 19: Einblasöffnung
- 20: Frischgasversorgungsvorrichtung
- 21: Gehäusekörper
- 22: Verstelleinrichtung
- 23: Klappenventil
- 24: Klappendrehachse
- 25: Anschlagabschnitt
- 26: Erste Anströmabschnitt
- 27: Zweite Anströmabschnitt
- 28: Ladeluftströmung
- 29: Ansaugströmung
- 30: Druckluftströmung

## Patentansprüche

1. Frischgasversorgungsvorrichtung (20) für eine Verbrennungsmaschine (1) mit Abgasturbolader (2), umfassend:
a) einen Ladelufteinlass (9) zum Einlass einer verdichteten Ladeluftströmung (28) aus dem Abgasturbolader (2);
b) einen Auslass (10), der mit dem Ladelufteinlass (9) über einen Ventilabschnitt (17) verbunden ist, wobei der Ventilabschnitt (17) durch zumindest ein um eine Klappendrehachse (24) verschwenkbares Klappenventil (23) in einer Verschlussstellung verschließbar ist;
c) eine Verstelleinrichtung (22), welche mit dem zumindest einen Klappenventil (23), zur Verstellung desselben in die Verschlussstellung gekoppelt ist; und
d) einen Drucklufteinlass (11) zum Einlass von Druckluft in den Auslass (10), wobei der Drucklufteinlass (11) so angeordnet ist, dass die Druckluft in einer Druckluftströmung (30) gegen die Richtung der Ladeluftströmung (28) in Richtung auf den Ventilabschnitt (17) hin auf das zumindest eine Klappenventil (23) hin ausgerichtet ist.

2. Frischgasversorgungsvorrichtung (20) nach Anspruch 1, **dadurch gekennzeichnet, dass** das zumindest eine Klappenventil (23) als Feder-Rückschlagklappenventil ausgebildet ist, wobei die Verstelleinrichtung (22) als Rückstellfeder ausgebildet ist.

3. Frischgasversorgungsvorrichtung (20) nach Anspruch 1 oder 2, **dadurch gekennzeichnet, dass** das zumindest eine Klappenventil (23) exzentrisch mit der Klappendrehachse (24) gekoppelt ist.

4. Frischgasversorgungsvorrichtung (20) nach einem der vorhergehenden Ansprüche, **dadurch gekennzeichnet, dass** das zumindest eine Klappenventil (23) einen ersten Anströmabschnitt (26) zur Zusammenwirkung mit der Ladeluftströmung (28) und einen zweiten Anströmabschnitt (27) zur Zusammenwirkung mit der Druckluftströmung (30) aufweist.

5. Frischgasversorgungsvorrichtung (20) nach Anspruch 4, dadurch gekennzeichnen, dass die Druckluftströmung (30) auf den zweiten Anströmabschnitt (27) des zumindest einen Klappenventils (23) zur Verstellung desselben in die Verschlussstellung ausgerichtet ist.

6. Frischgasversorgungsvorrichtung (20) nach Anspruch 5, **dadurch gekennzeichnet, dass** der Drucklufteinlass (11) mit einer Einblasöffnung (19) ausgebildet ist, welche zur strömungsgünstigen Lenkung der Druckluftströmung (30) auf den zweiten Anströmabschnitt (27) des zumindest einen Klappenventils (23) geformt ist.

7. Verfahren zum Betrieb einer Frischgasversorgungsvorrichtung (20) für eine Verbrennungsmaschine (1) mit Abgasturbolader (2), wobei die Frischgasversorgungsvorrichtung umfasst:
einen Ladelufteinlass (9) zum Einlass einer verdichteten Ladeluftströmung (28) aus dem Abgasturbolader (2);
einen Auslass (10), der mit dem Ladelufteinlass (9) über einen Ventilabschnitt (17) verbunden ist, wobei der Ventilabschnitt (17) durch zumindest ein um eine Klappendrehachse (24) verschwenkbares Klappenventil (23) in einer Verschlussstellung verschließbar ist;
eine Verstelleinrichtung (22), welche mit dem zumindest einen Klappenventil (23) gekoppelt ist; und
einen Drucklufteinlass (11) zum Einlass von Druckluft in den Auslass (10);
wobei das Verfahren folgende Verfahrensschritte aufweist:
a) Ermitteln einer Drehmomentanforderung der Verbrennungsmaschine (1) und Überwachen der Ladeluftströmung (28);
b) Einblasen von Druckluft in die Frischgasversorgungsvorrichtung (20) in einer Druckluftströmung (30) gegen die Richtung der Ladeluftströmung (28) auf das zumindest eine Klappenventil (23) hin ausgerichtet,
c) wobei die Verstelleinrichtung (22) das zumindest eine Klappenventil (23) zum Verschließen des Ventilabschnitts (17) verstellt und die Druckluftströmung (30) eine Verschließbewegung des zumindest einen Klappenventils (23) unterstützt; und
d) Beenden des Einblasens von Druckluft anhand der Überwachung der Ladeluftströmung (28).

8. Verfahren nach Anspruch 7, **dadurch gekennzeichnet, dass** die Druckluft in der Druckluftströmung (30) auf das zumindest eine Klappenventil (23) hin ausgerichtet eingeblasen wird.

## Claims

1. Fresh gas supply device (20) for an internal combustion engine (1) having an exhaust gas turbocharger (2), comprising:
a) a charge air inlet (9) for the inlet of a compressed charge air flow (28) out of the exhaust gas turbocharger (2);
b) an outlet (10) which is connected to the charge air inlet (9) via a valve portion (17), the valve portion (17) being closeable in a closing position by means of at least one flap valve (23) pivotable about a flap axis of rotation (24) ;
c) an adjusting device (22) which is coupled to the at least one flap valve (23), for adjusting the latter into the closing position; and
d) a compressed air inlet (11) for the inlet of compressed air into the outlet (10), the compressed air inlet (11) being arranged such that the compressed air, in a compressed air flow (30), is oriented in the direction of the valve portion (17), toward the at least one flap valve (23), counter to the direction of the charge air flow (28).

2. Fresh gas supply device (20) according to Claim 1, **characterized in that** the at least one flap valve the adjusting device (22) being designed as a restoring spring.

3. Fresh gas supply device (20) according to Claim 1 or 2, **characterized in that** the at least one flap valve (23) is coupled eccentrically to the flap axis of rotation (24).

4. Fresh gas supply device (20) according to one of the preceding claims, **characterized in that** the at least one flap valve (23) has a first onflow portion (26) for cooperation with the charge air flow (28) and a second onflow portion (27) for cooperation with the compressed air flow (30).

5. Fresh gas supply device (20) according to Claim 4, **characterized in that** the compressed air flow (30) is oriented onto the second onflow portion (27) of the at least one flap valve (23) for adjusting the latter into the closing position.

6. Fresh gas supply device (20) according to Claim 5, **characterized in that** the compressed air inlet (11) is formed with an injection port (19) which is shaped for steering the compressed air flow (30) onto the second onflow portion (27) of the at least one flap valve (23) favorably in terms of flow.

7. Method for operating a fresh gas supply device (20) for an internal combustion engine (1) having an exhaust gas turbocharger (2), the fresh gas supply device comprising:
a charge air inlet (9) for the inlet of a compressed charge air flow (28) out of the exhaust gas turbocharger (2);
an outlet (10) which is connected to the charge air inlet (9) via a valve portion (17), the valve portion (17) being closeable in a closing position by means of at least one flap valve (23) pivotable about a flap axis of rotation (24);
an adjusting device (22) which is coupled to the at least one flap valve (23); and
a compressed air inlet (11) for the inlet of compressed air into the outlet (10);
the method having the following method steps:
a) determination of a torque requirement of the internal combustion engine (1) and monitoring of the charge air flow (28);
b) injection of compressed air into the fresh gas supply device (20) in a compressed air flow (30) oriented onto the at least one flap valve (23) opposite to the direction of the charge air flow (28),
c) the adjusting device (22) adjusting the at least one flap valve (23) for closing the valve portion (17), and the compressed air flow (30) assisting a closing movement of the at least one flap valve (23) ; and
d) ending of the injection of compressed air on the basis of the monitoring of the charge air flow (28).

8. Method according to Claim 7, **characterized in that** the compressed air is injected into the compressed air flow (30) by being oriented onto the at least one flap valve (23).

## Revendications

1. Dispositif (20) à alimenter en gaz frais pour un moteur à combustion interne à turbosoufflante à gaz d'échappement (2), comprenant :
a) une tubulure d'admission de l'air de suralimentation (9) pour l'admission d'un courant de l'air de suralimentation comprimé (28) dérivé de ladite turbosoufflante à gaz d'échappement (2) ;
b) une tubulure de sortie (10) reliée à ladite tubulure d'admission de l'air de suralimentation (9) via une partie à soupape (17), à ladite partie à soupape (17) étant apte à être fermée par au moins une soupape à clapet (23) en une position de fermeture, qui est pivotable autour d'un axe de rotation de clapet (24) ;
c) un moyen d'ajustement (22), qui est couplé avec ladite au moins une soupape à clapet (23), pour l'ajustement de ladite soupape en la position de fermeture ; et
d) une tubulure d'admission de l'air comprimé (11) pour l'admission de l'air comprimé dans ladite sortie (10), à ladite tubulure d'admission de l'air comprimé (11) étant disposée d'une telle manière, que l'air comprimé soit dirigé en un courant de l'air comprimé (30) en sens opposé à la direction dudit courant de l'air de suralimentation (28) vers ladite partie à soupape (17), en étant orienté vers ladite au moins une soupape à clapet (23).

2. Dispositif (20) à alimenter en gaz frais selon la revendication 1, **caractérisé en ce que** ladite au moins une soupape à clapet (23) est conçue sous forme d'une soupape de protection à ressort à clapet, audit moyen d'ajustement (22) étant configuré sous forme d'un ressort de rappel.

3. Dispositif (20) à alimenter en gaz frais selon la revendication 1 ou 2, **caractérisé en ce que** ladite au moins une soupape à clapet (23) est couplée avec ledit axe de rotation de clapet (24) de manière excentrique.

4. Dispositif (20) à alimenter en gaz frais selon une quelconque des revendications précédentes, **caractérisé en ce que** ladite au moins une soupape à clapet (23) comprend une première partie d'arrivée (26) pour l'interaction avec ledit courant de l'air de suralimentation (28) et une deuxième partie d'arrivée (27) pour l'interaction avec ledit courant de l'air comprimé (30).

5. Dispositif (20) à alimenter en gaz frais selon la revendication 4, **caractérisé en ce que** ledit courant de l'air comprimé (30) est orienté vers ladite deuxième partie d'arrivée (27) de ladite au moins une soupape à clapet (23) pour l'ajustement de la dernière en la position de fermeture.

6. Dispositif (20) à alimenter en gaz frais selon la revendication 5, **caractérisé en ce que** ladite tubulure d'admission de l'air comprimé (11) est conçue à une ouverture d'injection (19), qui est formée pour diriger ledit courant de l'air comprimé (30) de façon bien appropriée au courant vers ladite deuxième partie d'arrivée (27) de ladite au moins une soupape à clapet (23).

7. Procédé à opérer un dispositif (20) à alimenter en gaz frais pour un moteur à combustion interne à turbosoufflante à gaz d'échappement (2), ce dispositif à alimenter en gaz frais comprenant :
a) une tubulure d'admission de l'air de suralimentation (9) pour l'admission d'un courant de l'air de suralimentation comprimé (28) dérivé de ladite turbosoufflante à gaz d'échappement (2) ;
b) une tubulure de sortie (10) reliée à ladite tubulure d'admission de l'air de suralimentation (9) via une partie à soupape (17), à ladite partie à soupape (17) étant apte à être fermée par au moins une soupape à clapet (23) en une position de fermeture, qui est pivotable autour d'un axe de rotation de clapet (24) ;
c) un moyen d'ajustement (22), qui est couplé avec ladite au moins une soupape à clapet (23) ; et
d) une tubulure d'admission de l'air comprimé (11) pour l'admission de l'air comprimé dans ladite sortie (10) ;
ce procédé comprenant les étapes suivantes :
a) détecter une demande de couple dudit moteur à combustion interne (1) et surveiller ledit courant de l'air de suralimentation (28) ;
b) injecter de l'air comprimé dans ledit dispositif (20) à alimenter en gaz frais en un courant de l'air comprimé (30) en un sens opposé à l'orientation dudit courant de l'air de suralimentation (28) vers ladite au moins une soupape à clapet (23) ;
c) audit moyen d'ajustement ajustant ladite au moins une soupape à clapet (23) pour la fermeture de ladite partie à soupape (17) et audit courant de l'air comprimé (30) assistant un mouvement de fermeture de ladite au moins une soupape à clapet (23) ; et
d) finir l'injection de l'air comprimé en fonction de la surveillance du courant de l'air de suralimentation (28).

8. Procédé selon la revendication 7, **caractérisé en ce que** l'air comprimé dans ledit courant de l'air comprimé est injecté à une orientation vers ledit au moins une soupape à clapet (23).
